# EUROPÄISCHE PATENTSCHRIFT

(11) **EP 1 507 049 B1**
(45) Veröffentlichungstag und Bekanntmachung des Hinweises auf die Patenterteilung: **14.06.2006**
(21) Anmeldenummer: 04017127.4
(22) Anmeldetag: 20.07.2004
(51) Int. Cl.: E04D 13/04, E04D 11/00, E03F 3/04

(54) **Entwässerungsrinne**
Drainage channel
Caniveau d'écoulement

(30) Priorität: 14.08.2003 DE 20312564 U
(43) Veröffentlichungstag der Anmeldung: 16.02.2005
(73) Patentinhaber: Reichlmeier Metallprofile GmbH, 80935 München (DE)
(72) Erfinder: Mischu, Christian, 81541 München (DE)
(74) Vertreter: Säger, Manfred

(56) Entgegenhaltungen:
- DE-A- 19 526 985
- DE-U- 29 814 887
- US-A- 4 878 782

## Beschreibung

Die Erfindung betrifft eine Entwässerungsrinne gemäss dem Oberbegriff des Hauptanspruchs.

Solche Entwässerungsrinnen sind an sich bekannt (DE-U-298 14 887) und bestehen aus Blech, weisen einen im wesentlichen U-förmigen Querschnitt auf und es sind an ihnen höhenverstellbare Füßchen angebracht. Diese Entwässerungsrinnen werden zur Entwässerung von Oberflächenwasser bei Flachdächern, Fassaden, Terrassen oder dergleichen eingesetzt. Um die Entwässerungsrinnen an die örtlichen Gegebenheiten anpaßbar zu machen, ist es notwendig, eine Höhenverstelleinrichtung für die Lagerung derselben vorzusehen, die bei den bekannten Entwässerungsrinnen in Form verstellbarer schraubbarer Stützfüßchen ausgeführt sind, die an den Entwässerungsrinnen lösbar befestigt sind.

Bei solchen Entwässerungsrinnen werden solche Stützfüßchen angebracht, welche in eine Ausnehmung der Rinne eingesteckt und dann mittels eines gesonderten Arretierstücks lösbar daran festgelegt werden.

Von Nachteil bei diesen bekannten Entwässerungsrinnen ist die umständliche Anbringung der Stützfüßchen mittels eines gesonderten Arretierstücks. Ausserdem sind zur Montage der Stützfüßchen beide Hände erforderlich, was nachteilig ist.

Der Erfindung liegt deshalb die Aufgabe zu Grunde, eine gattungsgemässe Entwässerungsrinne gemäss dem Oberbegriff des Hauptanspruchs so auszubilden, dass sie einfacher mit einhändiger Montage am gewünschten Ort anbringbar sind.

Diese Aufgabe wird bei einer gattungsgemässen Entwässerungsrinne gemäss dem Oberbegriff des Hauptanspruchs erfindungsgemäss durch dessen kennzeichnende Merkmale gelöst.

Erfindungsgemäß ist aus der vorzugsweise als Halterung ausgebildeten Scheibe zumindest eine Lasche ausgestanzt sowie aus der Ebene der Scheibe als Haltevorsprung herausgebogen, wodurch in einfachster Art und Weise quasi in einem Arbeitsgang die Halterung hergestellt ist, wobei der zumindest eine Haltevorsprung der Halterung in deren Lichtraumprofil einsetzbar und nach Einsetzen in der Ebene so mit der Hand durch Drehen und/oder Verschieben arretiert werden kann, wobei mit Vorteil Werkzeuge oder gesonderte weitere Teile - im Gegensatz zum Stand der Technik- nicht notwendig sind und mit Vorteil bei der Montage auch nur eine Hand erforderlich ist.

Um eine bessere grössere Haltekraft zu erzielen, ist es zweckmässig, die Laschen im Bereich ihrer freien Enden parallel zu der Ebene verlaufend als Haltevorsprung auszugestalten.

Wenn zwei vorzugsweise rotationssymmetrische Haltevorsprünge bei einer kreisförmig ausgebildeten Scheibe vorgesehen sind, kann mit Vorteil das Arretieren in einfacher Weise durch blosses Drehen geschehen.

Zum einfachen Handhaben kann jede Lasche wenigstens einen von der Ebene der Scheibe weggerichteten Umbug aufweisen, vermittels der die Halterung in Form der Scheibe gedreht werden kann.

Dieser Umbug kann in einer ersten Ausführungsform der Erfindung auf derselben Seite wie der Haltevorsprung angeordnet sein. Bei dieser Variante besteht der Vorteil, dass man keine störenden Umbuge im Bereich der Verstellhöhe des Stützfüßchens besitzt, also eine grössere Variablität der Höheneinstellung möglich ist.

Alternativ dazu jede Scheibe einen auf der anderen Seite des Haltevorsprungs befindlichen Umbug aufweisen.

In zweckmässiger Ausgestaltung ist der Umbug an der Lasche selbst angebracht, so dass die Haltelasche zunächst in das freie Lichtraumprofil der Ausnehmung mit dem daran befindlichen Umbug eingesetzt und danach auf der bezüglich der Ausnehmung anderen Seite der Halterung an den Umbugen die Halterung gedreht und/oder geschoben werden kann, um sie über den Rand der Ausnehmung zu bewegen, wobei die Halterung dann an der Ausnehmung lösbar festgelegt ist.

Weitere zweckmässige Ausgestaltungen und Weiterbildungen der Erfindung sind in den Unteransprüchen gekennzeichnet.

Zwei Ausführungsbeispiele der Erfindung werden nachfolgend unter Bezugnahme auf die Zeichnung näher erläutert. In dieser zeigt:
- Figur 1: eine Entwässerungsrinne mit einer Ausnehmung, in abgebrochener Draufsicht;
- Figur 2: eine erste Ausführungsform einer Halterung, in Draufsicht;
- Figur 3: die Halterung gemäss Figur 2, in Seitenansicht;
- Figur 4: eine Ansicht IV-IV gemäss Figur 3;
- Figur 5: eine zweite Ausführungsform einer Halterung, in schematischer Draufsicht;
- Figur 6: eine Seitenansicht der Halterung gemäss Figur 5;
- Figur 7: eine Ansicht VII-VII gemäss Figur 6.

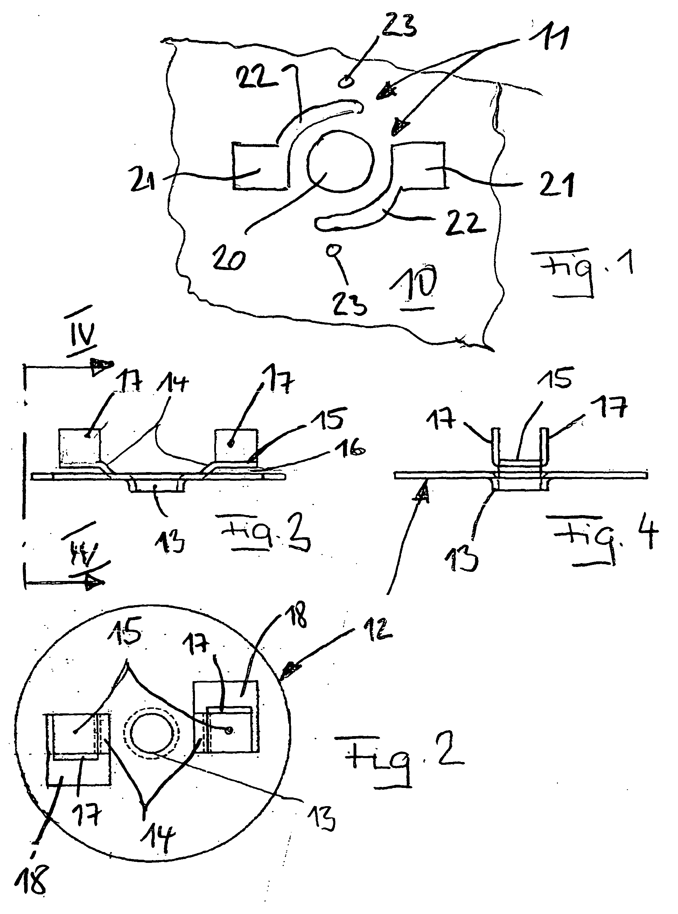

In Figur 1 ist in Draufsicht eine insgesamt mit 10 bezeichnete Entwässerungsrinne für Flachdächer oder dergleichen in Draufsicht dargestellt. Die insgesamt mit 11 bezeichnete Ausnehmung wird später im Detail noch näher beschrieben.

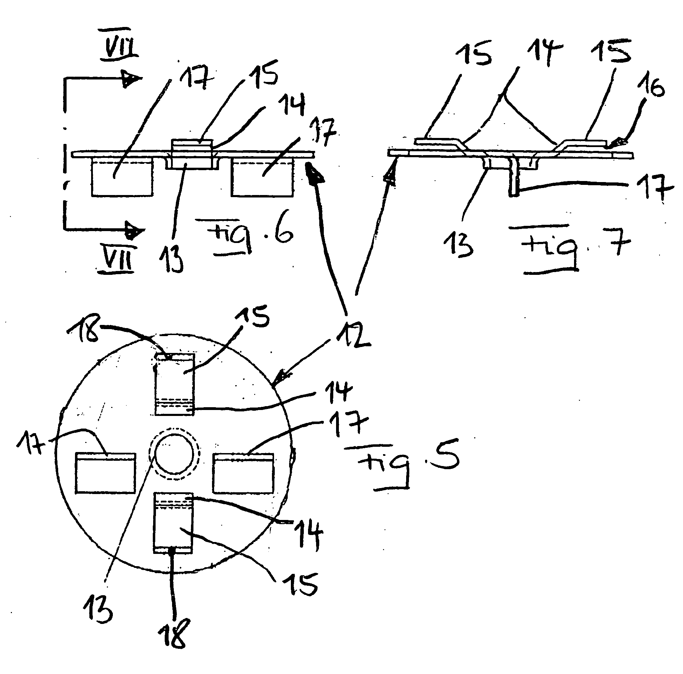

Figur 2 zeigt eine erste Ausführungsform einer als Scheibe ausgebildeten Halterung 12, die einen zentrischen, in Draufsicht nach unten vorstehenden Einzug 13 aufweist, der mit einem Innengewinde für den Gewindebolzen eines -nicht gezeigten, aber an sich bekannten- Stützfüsschens versehen ist. Auf der anderen Seiten des Einzugs 13 (Figur 3) sind zwei rotationssymmetrisch dazu angeordnete Haltevorsprünge 14 vorgesehen, die als ausgestanzte sowie aus der Ebene der Scheibe 12 herausgebogene und an ihren freien Enden 15 wieder parallel zu der Ebene der Scheibe 12 verlaufend ausgerichtete Laschen ausgestaltet sind. So entsteht ein in Figur 3 ersichtlicher Freiraum 16.

Weiterhin weist jeder als Lasche ausgebildete Haltevorsprung 14 an seiner einen Seite einen vorzugsweise rechtwinklig von der Ebene der Scheibe 12 weggerichteten Umbug 17 auf, mittels welchem man die in die Ausnehmung 11 eingesetzte Halterung 12 in ihre Arretierlage über den Rand der Ausnehmung so schieben kann, dass die Halterung lösbar an der Ausnehmung festgelegt ist. Durch den nach dem Stanzen umgebogenen Umbug 17 sowie den Haltevorsprung 14 ergibt sich fertigungstechnisch in der Scheibe 12 je eine Loch 18.

Die zweite Ausführungsform der ebenfalls als Scheibe ausgebildeten Halterung 12 ist in Figur 5 dargestellt. Auch dort ist der auch mit einem Innengewinde versehene Einzug 13 zentrisch vorgesehen. Des weiteren ist diese Scheibe mit zwei rotationssymmetrisch zu dem Einzug 13 -wie bei der Ausführungsform gemäss Figur 2- aus der Scheibe 12 ausgestanzten sowie aus der Ebene der Scheibe herausgebogenen Haltevorsprüngen 14 versehen, die an ihren freien Enden 15 wieder parallel zu der Ebene der Scheibe 12 verlaufend ausgerichtet sind. Insoweit unterscheidet sich die zweite von der ersten Ausführungsform der Halterung 12 nicht.

Die zweite Ausführungsform ist zwar auch mit zwei Umbugen 17 versehen, diese befinden sich jedoch mit Bezug auf die Haltevorsprünge 14 auf der anderen Seite der scheibenförmigen Halterung 12. Wird diese zweite Ausführungsform der Halterung 12 in die Ausnehmung 11 der Entwässerungsrinne 10 eingesetzt, so muss das Drehen unter manuellem Angriff an den beiden Umbugen 17 auf der anderen Seite der Entwässerungsrinne 10 als bei der ersten Ausführungsform der Halterung 12 (Figuren 2 bis 4) betätigt werden.

Die Ausnehmung 11 in der Entwässerungsrinne 10 gemäss Figur 1 ist zum Einsatz sowohl der ersten als auch der zweiten Ausführungsform der scheibenförmigen Halterung 12 vorgesehen. Hierzu ist ein zentrales Loch 20 für den Einzug 13 beziehungsweise den Gewindebolzen des nicht gezeigten Stützfüsschens vorgesehen. Dann sind symmetrisch zu dem zentralen Loch 20 zwei Aufnahmeöffnungen 21 für die Haltevorsprünge 14 mit deren parallel zu der Scheibe 12 verlaufenden freien Enden 15 vorgesehen, in die jede Halterung 12 zunächst -senkrecht zu der Ebene der Enwässerungsrinne 10- lose einsetzbar ist.

Jede dieser im wesentlichen an die Form des Haltevorsprungs 14 mit dessen freien Enden 15 angepassten Aufnahmeöffnung 21 ist mit einem sich daran anschliessenden kreisringförmigen Teilbereich 22 versehen, der konzentrisch zu dem zentralen Loch 20 ausgebildet ist. Beim Drehen der eingesetzten Halterung kann der Bereich, der als Lasche ausgestanzten sowie aus der Ebene der Scheibe herausgebogene Bereich des Haltevorsprungs 14 in diesen kreisringförmigen Teilbereich 22 der Ausnehmung 11 hinein gelangen, wohingegen die freien Enden 15 des Haltevorsprungs mit dem freien Raum 16 den Rand dieses kreisringförmigen Teilbereichs 22 übergreifen, sodass das freie Ende 15 des Haltevorsprungs 14 auf der einen Seite und der Rest der scheibenförmigen Halterung 12 auf der anderen Seite der Entwässerungsrinne 10 angeordnet sind. Ferner sind noch Arretierlöcher 23 vorgesehen, in die allfällig an den freien Enden 15 der Haltevorsprüngen 14 eingedrückte Vorsprünge zwecks Arretierung der Halterung 12 in der Drehendlage einrasten können.

## Patentansprüche

1. Entwässerungsrinne (10) für vorzugsweise Flachdächer mit daran lösbar festzulegenden Halterungen (12) für beispielsweise höhenverstellbare Stützfüßchen, wobei die Entwässerungsrinne zumindest eine, vorzugsweise in einer Ebene liegende Ausnehmung (11) und die Halterung daran angepasste Haltevorsprünge (14) aufweist, wobei jeder Haltevorsprung (14) winklig zu der Ebene der Ausnehmung (11) an deren freien Raum angepaßt, lose einsetzbar und nach dem Einsetzen in der Ebene so über den Rand der Ausnehmungen (11) dreh- und/oder schiebbar ist, dass die Halterung (12) an der Ausnehmung (11) lösbar festgelegt ist, und wobei jeder Haltevorsprung (14) senkrecht zu der Ebene der Ausnehmungen (11) einsetzbar ist, **dadurch gekennzeichnet, dass** die Halterung (12) als Scheibe ausgebildet ist und dass aus dieser zumindest eine Lasche ausgestanzt sowie aus der Ebene der Scheibe als Haltevorsprung (14) herausgebogen ist.

2. Entwässerungsrinne (10) mit daran lösbar festzulegenden Halterungen (12) nach Anspruch 1, **dadurch gekennzeichnet, dass** die aus der Ebene der Scheibe herausgebogene zumindest eine Lasche im Bereich ihrer freien Enden (15) wieder parallel zu der Ebene der Scheibe ()12 verlaufend als Haltevorsprung (14) ausgebildet ist.

3. Entwässerungsrinne (10) mit daran lösbar festzulegenden Halterungen (12) nach Anspruch 2, **dadurch gekennzeichnet, dass** zwei Haltevorsprünge (14) vorgesehen sind.

4. Entwässerungsrinne (10) mit daran lösbar festzulegenden Halterungen (12) nach Anspruch 3, **dadurch gekennzeichnet, dass** die Halterung (12) als kreisförmige Scheibe ausgebildet ist und dass die zwei Haltevorsprünge (14) zueinander rotationssymmetrisch angeordnet sind.

5. Entwässerungsrinne (10) mit daran lösbar festzulegenden Halterungen (12) nach einem der Ansprüche 1-4, **dadurch gekennzeichnet, dass** jede Lasche zumindest einen von der Ebene der Scheibe (12) weggerichteten Umbug (17) aufweist.

6. Entwässerungsrinne (10) mit daran lösbar festzulegenden Halterungen (12) nach einem der Ansprüche 1-5, **dadurch gekennzeichnet, dass** jede Scheibe (12) einen aus ihrer Ebene ausgestanzten und sich winklig aus dieser auf der anderen Seite des Haltevorsprungs (14) befindlichen Umbug aufweist (Figur 6).

7. Entwässerungsrinne (10) mit daran lösbar festzulegenden Halterungen (12) nach einem der Ansprüche 1-6, **dadurch gekennzeichnet, dass** jede Scheibe (12) einen aus ihrer Ebene ausgestanzten und sich winklig aus dieser auf derselben Seite wie der Haltevorsprung (14) befindlichen Umbug aufweist (Figur 3).

8. Entwässerungsrinne (10) mit daran lösbar festzulegenden Halterungen (12) nach einem der Ansprüche 5-7, **dadurch gekennzeichnet, dass** der Umbug (17) rechtwinklig zu der Ebene der Scheibe (12) ausgerichtet ist.

9. Entwässerungsrinne (10) mit daran lösbar festzulegenden Halterungen (12) nach einem der Ansprüche 1-8, **dadurch gekennzeichnet, dass** die Halterung (12) einen Einzug (13) mit einem Innengewinde für den Gewindebolzen des Stützfüßchens aufweist.

10. Entwässerungsrinne (10) mit daran lösbar festzulegenden Halterungen (12) nach einem der Ansprüche 1-9, **dadurch gekennzeichnet, dass** die Ausnehmung ein zentrales Loch (20), zwei symmetrisch dazu angeordneten Aufnahmeöffnungen (21) zum Einsatz der Haltevorsprünge (14) zusammen mit deren parallel zu der Scheibe 12 verlaufenden freien Enden (15) sowie einen sich an jede derselben (21) anschliessenden kreisringförmigen Teilbereich (22) aufweist, der konzentrisch zu dem zentralen Loch (20) zur Aufnahme des aus der Ebene der Scheibe herausgebogenen Bereichs des Haltevorsprungs (14) beim Drehen der zunächst lose eingesetzten Halterung (12) unter dessen Aufnahme in dem freien Raum (16) angeordnet ist.

11. Entwässerungsrinne (10) mit daran lösbar festzulegenden Halterungen (12) nach Anspruche 10, **dadurch gekennzeichnet, dass** die Ausnehmung (11) noch Arretierlöcher (23) aufweist, in die allfällig an den freien Enden (15) der Haltevorsprüngen 14 angebrachte eingedrückte Vorsprünge zwecks Arretierung der Halterung (12) in der Drehendlage einrastbar sind.

## Claims

1. Drainage channel (10) preferably for flat roofs comprising mountings (12) to be fitted to the latter in a detachable manner, for example, for height-adjustable support feet, wherein the drainage channel provides at least one cut-out (11) preferably disposed in one plane; wherein the mounting provides retaining projections (14) adapted to the latter; wherein each retaining projection (14) is angled relative to the plane of the cut-out (11) being adapted to its free space, capable of being inserted loosely and, after insertion, capable of being rotated and/or slid within the plane over the edge of the cut-outs (11) in such a manner that the mounting (12) is fitted to the cut-out (11) in a detachable manner; and wherein each retaining projection (14) can be inserted perpendicular to the plane of the cut-outs (11),
**characterised in that**
the mounting (12) is formed as a disc, and that at least one strap is punched out from the latter and folded outwards from the plane of the disc to form the retaining projection (14).

2. Drainage channel (10) with mountings (12) to be fitted to the latter in a detachable manner according to claim 1,
**characterised in that**
the at least one strap folded outwards from the plane of the disc is once again designed to run parallel to the plane of the disc (12) in the region of its free ends (15) thereby forming a retaining projection (14).

3. Drainage channel (10) with mountings (12) to be fitted to the latter in a detachable manner according to claim 2,
**characterised in that**
two retaining projections (14) are provided.

4. Drainage channel (10) with mountings (12) to be fitted to the latter in a detachable manner according to claim 3,
**characterised in that**
the mounting (12) is designed as a circular disc, and that the two retaining projections (14) are arranged with rotational symmetry relative to one another.

5. Drainage channel (10) with mountings (12) to be fitted to the latter in a detachable manner according to any one of claims 1-4,
**characterised in that**
each strap provides at least one folded flap (17) pointing away from the plane of the disc (12).

6. Drainage channel (10) with mountings (12) to be fitted to the latter in a detachable manner according to any one of claims 1-5,
**characterised in that**
each disc (12) provides a folded flap punched outwards from its plane and disposed at an angle relative to the latter on the other side of the retaining projection (14) (Figure 6).

7. Drainage channel (10) with mountings (12) to be fitted to the latter in a detachable manner according to any one of claims 1-6,
**characterised in that**
each disc (12) provides a folded flap punched outwards from its plane and disposed at an angle relative to the latter on the same side as the retaining projection (14) (Figure 3).

8. Drainage channel (10) with mountings (12) to be fitted to the latter in a detachable manner according to any one of claims 5-7,
**characterised in that**
the folded flap (17) is orientated at right angles to the plane of the disc (12).

9. Drainage channel (10) with mountings (12) to be fitted to the latter in a detachable manner according to any one of claims 1-8,
**characterised in that**
the mounting (12) provides an indentation (13) with internal threading for the threaded pin of the support foot.

10. Drainage channel (10) with mountings (12) to be fitted to the latter in a detachable manner according to any one of claims 1-9,
**characterised in that**
the cut-out (11) provides one central borehole (20); two retaining apertures (21), arranged symmetrically to the latter for the insertion of the retaining projections (14) together with their free ends (15) running parallel to the disc (12); and a circular portion (22) adjoining each of the latter (21), which is arranged concentrically to the central borehole (20), for retaining the region of the retaining projection (14) folded outwards from the plane of the disc upon the rotation of the initially loosely-inserted mounting (12) thereby retaining it in the free space (16).

11. Drainage channel (10) with mountings (12) to be fitted to the latter in a detachable manner according to claim 10,
**characterised in that**
the cut-out (11) also comprises locking boreholes (23), in which indented projections, which may be fitted to the free ends (15) of the retaining projections (14), can engage for the purpose of locking the mounting (12) in the final rotational position.

## Revendications

1. Chéneau (10) pour, de préférence, des toits-terrasses comportant des attaches (12) à fixer de manière détachable pour, par exemple, des béquilles réglables en hauteur, le chéneau présentant au moins un évidement (11), situé de préférence sur un plan, et l'attache des épaulements de maintien (14) adaptés, chaque épaulement de maintien (14) étant adapté à l'espace libre de l'évidement (11) en formant un angle avec le plan de celui-ci, pouvant être inséré de manière flottante et pouvant pivoter et/ou se déplacer sur un plan, après la mise en place, sur le bord des évidements (11) de manière à ce que l'attache (12) soit fixée de manière détachable sur l'évidement (11), et chaque épaulement de maintien (14) puisse être placé perpendiculairement au plan des évidements (11), **caractérisé en ce que** l'attache (12) est en forme de disque et **en ce qu'**au moins une languette est découpée par matriçage dans celui-ci et recourbé à l'extérieur du plan du disque en tant qu'épaulement de maintien (14).

2. Chéneau (10) comportant des attaches (12) à fixer dessus de manière détachable selon la revendication 1, **caractérisé en ce qu'**au moins une languette, recourbée à l'extérieur du plan du disque est configurée en tant qu'épaulement de maintien (14) à nouveau parallèle au plan du disque (12) au niveau de ses extrémités libres (15).

3. Chéneau (10) comportant des attaches (12) à fixer dessus de manière détachable selon la revendication 2, **caractérisé en ce que** deux épaulements de maintien (14) sont prévus.

4. Chéneau (10) comportant des attaches (12) à fixer dessus de manière détachable selon la revendication 3, **caractérisé en ce que** l'attache (12) est configurée en tant que disque circulaire et **en ce que** deux épaulements de maintien (14) sont disposés de manière symétrique en rotation l'un par rapport à l'autre.

5. Chéneau (10) comportant des attaches (12) à fixer dessus de manière détachable selon l'une quelconque des revendications 1 à 4, **caractérisé en ce que** chaque languette présente au moins un recourbement (17) s'éloignant du plan du disque (12).

6. Chéneau (10) comportant des attaches (12) à fixer dessus de manière détachable selon l'une quelconque des revendications 1 à 5, **caractérisé en ce que** chaque disque (12) présente un recourbement découpé par matriçage dans le plan de celui-ci et se trouvant de l'autre côté de l'épaulement de maintien (14) en formant un angle avec ce plan.

7. Chéneau (10) comportant des attaches (12) à fixer dessus de manière détachable selon l'une quelconque des revendications 1 à 6, **caractérisé en ce que** chaque disque (12) présente un recourbement découpé par matriçage dans le plan de celui-ci et se trouvant du même côté de l'épaulement de maintien (14) en formant un angle avec ce plan.

8. Chéneau (10) comportant des attaches (12) à fixer dessus de manière détachable selon l'une quelconque des revendications 5 à 7, **caractérisé en ce que** le recourbement (17) est dirigé vers le plan du disque (12) en formant un angle droit.

9. Chéneau (10) comportant des attaches (12) à fixer dessus de manière détachable selon l'une quelconque des revendications 1 à 8, **caractérisé en ce que** l'attache (12) présente un renfoncement (13) ayant un filetage intérieur pour le boulon fileté de la béquille.

10. Chéneau (10) comportant des attaches (12) à fixer dessus de manière détachable selon l'une quelconque des revendications 1 à 9, **caractérisé en ce que** l'évidement présente un trou central (20), deux ouvertures de réception (21) disposées symétriquement à celui-ci pour l'insertion des épaulements de maintien (14) conjointement à leurs deux extrémités libres (15) parallèles au disque (12) ainsi qu'une zone partielle (22) circulaire adjacente à chacune de celles-ci (21), zone qui est disposée concentriquement au trou central (20) pour loger la zone de l'épaulement de maintien (14), recourbé à l'extérieur du plan du disque, lors de la rotation de l'attache (12) insérée d'abord de manière flottante sous le logement de cet épaulement dans l'espace libre (16).

11. Chéneau (10) comportant des attaches (12) à fixer dessus de manière détachable selon la revendication 10, **caractérisé en ce que** l'évidement (11) présente encore des trous de blocage (23) dans lesquels on peut encliqueter éventuellement des épaulements enfoncés placés sur les extrémités libres (15) des épaulements de maintien 14 afin de bloquer l'attache (12) dans la position finale de rotation.
